# EUROPEAN PATENT SPECIFICATION

(11) **EP 3 933 291 B1**
(45) Date of publication and mention of the grant of the patent: **07.08.2024**
(21) Application number: 21178124.0
(22) Date of filing: 08.06.2021
(51) Int. Cl.: F24F 12/00

(54) **EXHAUST AIR HEAT PUMP SYSTEM AND METHOD FOR CONTROLLING THE SYSTEM**
ABLUFTWÄRMEPUMPENSYSTEM UND VERFAHREN ZUR STEUERUNG DES SYSTEMS
SYSTÈME DE POMPE À CHALEUR D'AIR D'ÉCHAPPEMENT ET PROCÉDÉ DE COMMANDE DU SYSTÈME

(30) Priority: 01.07.2020 FI 20205700
(43) Date of publication of application: 05.01.2022
(73) Proprietor: Smart Heating Oy, 01740 Vantaa (FI)
(72) Inventor: KOSKELA, Hannu, 33870 Tampere (FI)
(74) Representative: Berggren Oy

(56) References cited:
- EP-A1- 2 653 793
- DE-A1- 2 829 689
- GB-A- 2 247 072
- US-A1- 2018 336 775

## Description

The invention relates to a system utilizing an exhaust air heat pump for utilizing heat recovered from a building's exhaust air. More particularly, the invention relates to such a system, which is supplemented with a building cooling feature, and a method for controlling such a system.

An exhaust air heat pump is commonly used for recovering thermal energy bound in a building's exhaust air in order to save energy and utilize the recovered energy for heating the building and/or it's service water.

Such known exhaust air heat pumps typically comprise a heat recovery device arranged in connection with a building's exhaust air flue or channel system, a heat pump, a first medium circulation for transmitting the recovered heat from the recovery device to the heat pump, and a second medium circulation for transmitting heat from the heat pump for example to a boiler.

Publication GB 2 247 072 A discloses a heating or a cooling system that uses a heat pump and a phase-change thermal storage tank to supply space heating, space cooling, and domestic hot water to a building, wherein a heat exchanger in the exhaust air stream and another one attached to the building grey water drain pipe extracts heat from the stale air and grey water for delivery to the thermal storage tank via an ethylene glycol loop.

US 2018/0336775 A1 discloses a system for heating and cooling a building comprising a heat pump. For building heating and building cooling the heat pump flow direction is reversed. Exhaust air is employed as one of several heat sources coupled to a fluid circuit when the building is heated. When the heat pump is not running, the fluid circuit may feed a heat exchanger for cooling a further fluid circuit, which in turn cools the building.

The current invention expands the usability and use of the exhaust air heat pump system also for cooling a building. Thus, the utility of the exhaust air heat pump system among other expands also to the summer time. The solution according to the invention can be used also for example for cooling cold service water, so that it is cold immediately when it is poured from the tap, and it is not necessary to pour large amounts of water directly into the drain while waiting for the running water to cool.

The exhaust aid heat pump system and cooling system according to the invention comprises a heat pump, a heat recovery device arranged in connection with an exhaust air channel, a first medium circulation between the heat recovery device and the heat pump, a boiler, a second medium circulation between the heat pump and the boiler, and pumps for achieving flow of mediums in the first and second medium circulations. Additionally, the system comprises a cooling medium circulation, which is connected to said first medium circulation via a first heat exchanger, a cooling water tank, from which the cooling medium circulation transfers thermal energy to the first heat exchanger, and a pump for achieving flow of the cooling medium in the cooling medium circulation, wherein the systems are configured such that the cooling medium is transmitted from the cooling water tank to the cooling system.

Thus, in the solution according to the invention, the first medium circulation of the exhaust air heat pump can be utilized for cooling the cooling water tank, from which cooled medium can in turn be transmitted to the cooling system of the building.

In an advantageous embodiment of the system according to the invention, the system additionally comprises a second heat exchanger, which heat exchanger transfers thermal energy from the second medium circulation to the first medium circulation. In this embodiment, the second heat exchanger can advantageously be switched off from the operation of the system via valves, which valves are advantageously 3-way valves.

Thus, for example in the summer time, the superfluous thermal energy bound in the boiler can be removed from the system, and this removal of thermal energy can be removed from use as needed, for example as seasons change.

In an advantageous embodiment of the system according to the invention, said heat recovery device can be switched off from the first medium circulation exiting the heat pump via the valves. The valves are advantageously 3-way valves. This way, the cooled medium from the heat pump can in its entirety be used for cooling the building and its cold service water. In this embodiment, thermal energy can advantageously be transferred via said first medium circulation directly from the second heat exchanger to the heat recovery device. Thus, superfluous thermal energy can be removed from the system via the building's exhaust air.

In an advantageous embodiment of the system according to the invention, the system additionally comprises a control system for controlling the exhaust air heat pump system.

The invention also offers a method for controlling an exhaust air heat pump system, where an exhaust air heat pump system according to the invention is controlled via valves and pumps in the system in question, and in which method at least part of the cooled medium exiting the heat pump of said first medium circulation is steered directly to the first heat exchanger to cool down the medium of the cooling medium circulation.

In an advantageous embodiment of the method according to the invention, part of the cooled medium of the first medium circulation exiting the heat pump is steered to bypass the first heat exchanger, whereafter the medium of the first medium circulation is steered to the heat recovery device, from which the heated medium is steered back to the heat pump. In this embodiment, the second heat exchanger is advantageously closed off from the heat pump system and its operation. Additionally, medium from the cooling medium circulation is advantageously used for cooling the building.

In an alternative advantageous embodiment of the method according to the invention, the cooled medium exiting the heat pump of the first medium circulation is steered in its entirety to the first heat exchanger, and from the first heat exchanger back to the heat pump. In this embodiment, part of the heated medium exiting the heat pump of the second medium circulation is advantageously steered to the second heat exchanger to cool the medium.

More particularly, the features of the exhaust air heat pump system according to the invention are presented in claim 1, and features of the method according to the invention are presented in claim 7. The dependent claims present preferred features and embodiments of the invention.

In the following, the invention will be described in an exemplary manner with reference to the appended drawings, in which
Figure 1 shows in a schematic manner an exhaust air heat pump system according to prior art,
Figure 2 shows in a schematic manner an exhaust air heat pump system according to the invention, and
Figures 3A and 3B show the system of Figure 2 in two different operational states.

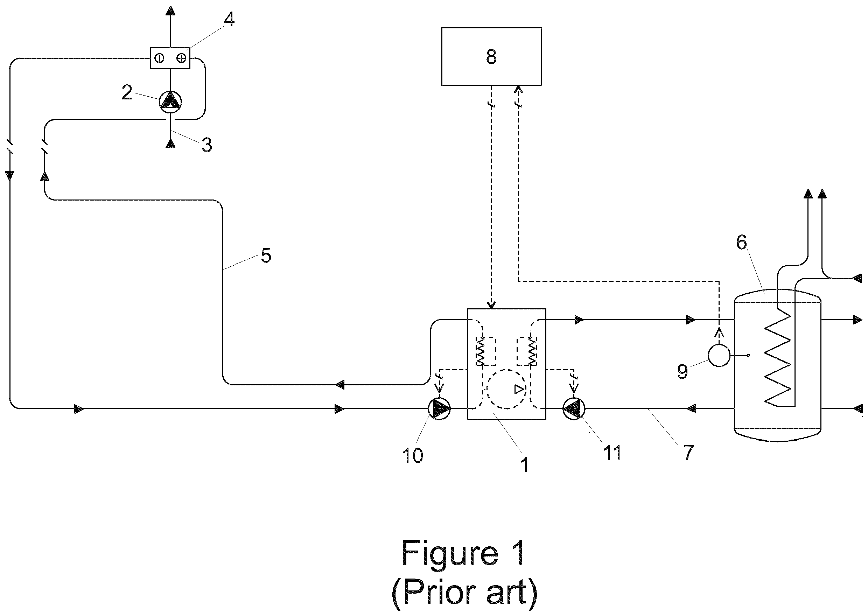

The solution according to prior art shown in a schematic manner in Figure 1 comprises a heat pump 1, a heat recovery device 4 arranged in connection with the building's exhaust air channel 3 equipped with an exhaust air fan 2, a first medium circulation 5, the building's boiler 6, a second medium circulation 7, and a control system 8.

In this solution, the heat recovery device 4 recovers thermal energy from the building from the warm indoor air removed from the exhaust air channel 3 with the exhaust air fan 2. The recovered thermal energy is transferred from the recovery device 4 to the heat pump 1 with the first medium circulation 5. The heat pump 1 transfers the recovered thermal energy from the first medium circulation 5 to the second medium circulation 7. The second medium circulation 7 transfers the recovered thermal energy to the boiler 6 to heat up the building and the hot service water. The control system 8 monitors the temperature of the water in the boiler based on temperature data received from a temperature sensor 9, the heating needs of the building based on the outdoor temperature and/or the need for hot service water, and adjusts the operation of the heat pump 1 and the pumps 10 and 11 of the first and second medium circulation based on these.

This type of known exhaust air heat pump is typically used in the winter for heating a building and hot service water and in the summer only for heating hot service water. Two separate water tanks are also often used, whereby one tank is for heating the building and the other for hot service water, and recovered thermal energy is steered to either tank based on need. Thus, the energy costs of a building can be reduced.

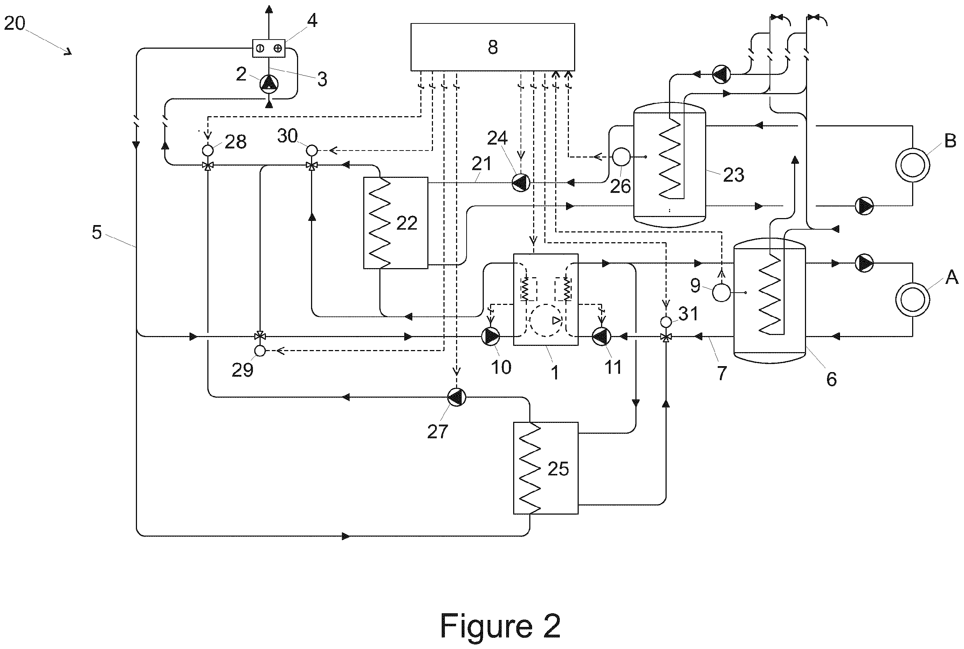

Figure 2 shows in a schematic manner an exhaust air heat pump system 20 according to the invention. The system 20 of Figure 2 comprises all the parts of the known exhaust air heat pump of Figure 1 and they are marked with corresponding reference numbers in Figure 2. The heating network A of the building has additionally been added in connection with the boiler 6, to clarify the operation of the system 20.

The exhaust air heat pump system 20 of Figure 2 additionally comprises a cooling medium circulation 21, which comprises, in addition to the medium circulation, a heat exchanger 22, a cooling water tank 23 and a pump 24 for circulating the medium in the cooling medium circulation.

The heat exchanger 22 of the cooling medium circulation 21 is connected to the system's 20 first medium circulation 5 between the heat pump 1 and the heat recovery device 4, whereby the cooled medium exiting the heat pump via the heat exchanger first cools down the cooling medium circulation and its cooling medium. From the heat exchanger 22 the cooled cooling medium is steered to the cooling water tank 23, where it is utilized for cooling the building and where it cools down cold service water by removing thermal energy from the service water. The cooling medium, which has been heated in the cooling water tank 23, is steered back to the heat exchanger 22 for cooling. The cooling water tank 22 is connected to the cooling network B of the building for delivering cooled medium to the cooling network.

The exhaust air heat pump system 20 also comprises a condenser heat exchanger 25, via which thermal energy can, if necessary, be transferred from the system's second medium circulation 7 to the first medium circulation 5.

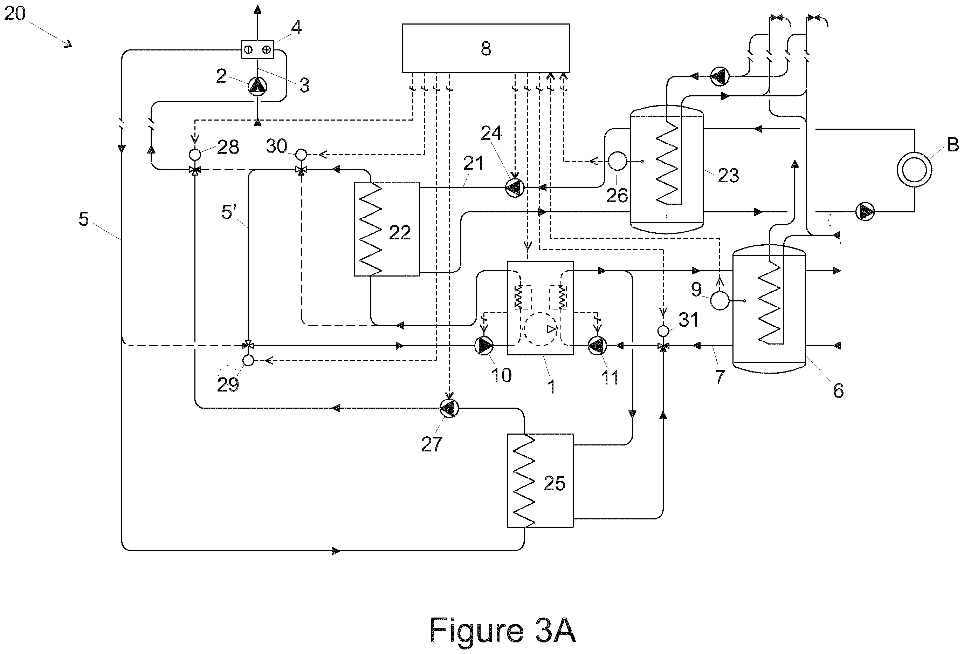

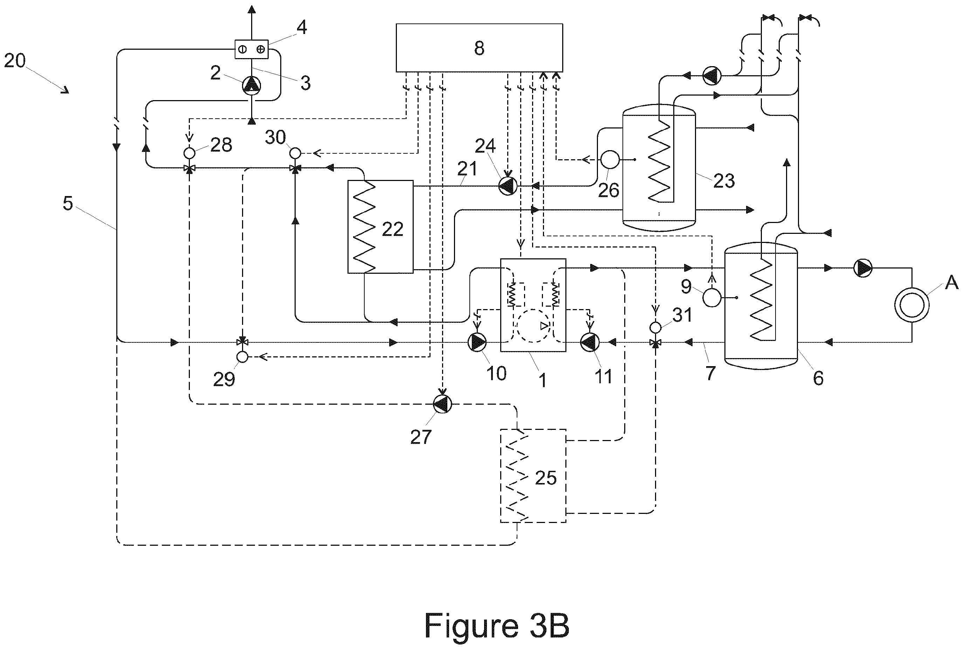

The control system 8 controlling the system 20 monitors the temperature of the boiler 6 with temperature data received from the temperature sensor 9 and the temperature of the cooling water tank 23 from the temperature sensor 26, and controls the heat pump 1, pumps 10, 11, 24 and 27 of the system, and the valves 28, 29, 30 and 31 of the systems based on this temperature data, if necessary. The valves 28, 29, 30 and 31 are in this embodiment 3-way valves, and via the valves 30 and 31 it is possible to adjust the amount of medium flowing through them, while the valves 28 and 29 switch the medium channels in an on/off manner. The operation of the control system is described in more detail in connection with Figures 3A and 3B.

The heating network A comprises for example the medium circulation comprising the building's radiators, with which medium circulation thermal energy is transferred from the boiler 6 via the radiators to heating the building's indoor air.

The cooling network B can comprise for example fan converters for cooling the building's indoor air.

Figures 3A and 3B show in a schematic manner the different operating states of the exhaust air heat pump system 20 of Figure 2.

Figure 3A shows the system's 20 operating state, where both the cooling medium circulation 21 and the condenser heat exchanger 25 are in use in the exhaust air heat pump system. In the operating state of the figure, the exhaust air heat pump system 20 according to the invention is in cooling use, where heating is also utilized.

In this operating state, the control system 8 steers the first medium circulation 5' exiting the heat pump 1, via the 3-way valves 28, 29 and 30, to circulate only via the cooling heat exchanger 22 of the cooling medium circulation 21 before it is circulated back to the heat pump. Thus, cooled medium of the first medium circulation 5' exiting the heat pump 1 is in this operating state used only for cooling the cooling heat exchanger 22 and thereby the medium of the cooling medium circulation 21.

The control system 8 steers the second medium circulation 7 exiting the heat pump 1 to circulate via the boiler 6 and additionally the condenser heat exchanger 25. Superfluous thermal energy can thus be removed from the exhaust air heat pump system 20 according to the invention in this operating state by leading it via a part of the first medium circulation 5 not connected to the heat pump 1 to the heat recovery device 4, from where it is transferred to the exhaust air of the building.

In this operating state, the exhaust air heat pump system 20 according to the invention produces cooled medium from the cooling water tank 23 to the cooling network B of the building, and keeps via the condenser heat exchanger 25 the temperature of the boiler 6 and thus the temperature of the hot service water within temperature values set for it, by transferring thermal energy from the second medium circulation 7 via the first medium circulation 5 to the exhaust air, if necessary.

Figure 3B shows the system's 20 operating state, where the cooling medium circulation 21 is in use, but the condenser heat exchanger 25 has been taken out of use in the exhaust air heat pump system. In the operating state of the figure, the exhaust air heat pump system 20 according to the invention is in heating use, where cooling is also utilized.

In this operating state, the control system 8 only steers a part of the cooled medium of the first medium circulation 5 exiting the heat pump 1 for cooling use to the cooling heat exchanger 22 via the 3-way valve 30 before recovery of thermal energy from the exhaust air of the building occurring with the recovery device 4, and closes off the condenser heat exchanger 25 from the operation of the system via the 3-way valves 28, 29 and 31.

In this operating state, the cooling network B of the building is typically not in use and the cooling water tank 23 is used only for cooling cold service water. The thermal energy produced by the heat pump 1 is in turn steered in its entirety to the boiler 6 and thus to heating hot service water and heating the building via the heating network A.

In the exhaust air heat pump system 20 according to the invention, the operation of the control system 8 can for example be as follows.

The control system 8 controls the exhaust air heat pump system 20 into the operating state according to Figure 3A when the daily average temperature has been over 17 degrees for two consecutive days. When the daily average temperature falls below 13 degrees for two consecutive days, the control system 8 controls the system into the operating state shown in Figure 3B. The control system 8 also controls, when necessary, the internal control system of the heat pump 1 into the operation according to the operating state of the exhaust air heat pump system 20, either controlled by the temperature sensor 9 of the boiler 6 or controlled by the temperature sensor 26 of the cooling tank 23. This switching of operating states can alternatively also be implemented manually or automatically, for example according to seasons.

The control system 8 also controls the efficiency of the heat transfer of the exhaust air heat pump system 20 by controlling the pumps 10, 11 and 24, and in operating state 3A also pump 27, based on temperature data received from the temperature sensors 9 and 26, so that the temperatures of the boiler 6 and cooling water tank 23 can be kept within set temperature ranges.

Regarding the exemplary embodiment according to the invention shown in the figures and described above, it should be noted that it is in no way intended to limit the invention. Person skilled in the art knows how to and can based on their own knowledge amend the above-presented embodiment in various obvious ways within the protective scope of the following claims. The invention is thus limited only by the protective scope defined by the following claims.

## Claims

1. An exhaust air heat pump system (20) for a building and a cooling system for said building, the exhaust air heat pump system (20) comprising:
- a heat pump (1),
- a heat recovery device (4) arranged in connection with an exhaust air channel (3),
- a first medium circulation (5) between the heat recovery device and the heat pump,
- a boiler (6),
- a second medium circulation (7) between the heat pump and the boiler, and
- pumps (10, 11) for achieving flow of mediums in the first and second medium circulation,
wherein the system (20) additionally comprises a cooling medium circulation (21), which is connected to said first medium circulation (5) via a first heat exchanger (22), a cooling water tank (23), from which the cooling medium circulation transfers thermal energy to the first heat exchanger, and a pump (24) for achieving flow of the cooling medium in the cooling medium circulation, wherein the systems are configured such that the cooling medium is transmitted from the cooling water tank to the cooling system.

2. The system (20) according to claim 1, which system additionally comprises a second heat exchanger (25), which heat exchanger transfers thermal energy from the second medium circulation (7) to the first medium circulation (5).

3. The system (20) according to claim 2, where said second heat exchanger (25) can be switched off from the operation of the system via valves (28, 29, 31), which valves are advantageously 3-way valves.

4. The system (20) according to any of the claims 1-3, where said heat recovery device (4) can be switched off from the first medium circulation (5') exiting the heat pump (1) via valves (28, 29), which valves are advantageously 3-way valves.

5. The system (20) according to claims 2 and 4, where thermal energy is transferred via said first medium circulation (5) directly from the second heat exchanger (25) to the heat recovery device (4).

6. The system (20) according to any of the claims 1-5, which system additionally comprises a control system (8) for controlling the exhaust air heat pump system (20).

7. A method for controlling an exhaust air heat pump system (20) according to any of the preceding claims wherein at least part of the cooled medium exiting the heat pump (1) of said first medium circulation (5) is steered directly to the first heat exchanger (22) to cool down the medium of the cooling medium circulation (21).

8. The method according to claim 7, where part of the cooled medium of the first medium circulation (5) exiting the heat pump (1) is steered to bypass the first heat exchanger (22), whereafter the medium of the first medium circulation is steered to the heat recovery device (4), from which the heated medium is steered back to the heat pump.

9. The method according to claim 8, where the second heat exchanger (25) is closed off from the heat pump system (20).

10. The method according to any of the claims 7-9, where medium of the cooling medium circulation (21) is used for cooling a building.

11. The method according to claim 7, where the cooled medium exiting the heat pump (1) of the first medium circulation (5') is steered in its entirety to the first heat exchanger (22), and from the first heat exchanger back to the heat pump.

12. The method according to claim 11, where part of the heated medium exiting the heat pump (1) of the second medium circulation (7) is steered to the second heat exchanger (25) to cool down the medium.

## Patentansprüche

1. Abluftwärmepumpensystem (20) für ein Gebäude und ein Kühlsystem für das Gebäude, wobei das Abluftwärmepumpensystem (20) Folgendes umfasst:
- eine Wärmepumpe (1),
- eine Wärmerückgewinnungsvorrichtung (4), die in Verbindung mit einem Abluftkanal (3) angeordnet ist,
- eine erste Mediumzirkulation (5) zwischen der Wärmerückgewinnungsvorrichtung und der Wärmepumpe,
- einen Heizkessel (6),
- eine zweite Mediumzirkulation (7) zwischen der Wärmepumpe und dem Heizkessel, und
- Pumpen (10, 11) zur Erzielung eines Durchflusses von Medien in der ersten und zweiten Mediumzirkulation,
wobei das System (20) zusätzlich eine Kühlmediumzirkulation (21), die mit der ersten Mediumzirkulation (5) über einen ersten Wärmetauscher (22) verbunden ist, einen Kühlwassertank (23), von dem die Kühlmediumzirkulation thermische Energie an den ersten Wärmetauscher überträgt, und eine Pumpe (24) zur Erzielung eines Durchflusses des Kühlmediums in der Kühlmediumzirkulation umfasst, wobei die Systeme so konfiguriert sind, dass das Kühlmedium vom Kühlwassertank zum Kühlsystem übertragen wird.

2. System (20) nach Anspruch 1, das zusätzlich einen zweiten Wärmetauscher (25) umfasst, der thermische Energie aus der zweiten Mediumzirkulation (7) an die erste Mediumzirkulation (5) überträgt.

3. System (20) nach Anspruch 2, wobei der zweite Wärmetauscher (25) über Ventile (28, 29, 31) vom Betrieb des Systems abgeschaltet werden kann, wobei die Ventile vorteilhafterweise 3-Wege-Ventile sind.

4. System (20) nach irgendeinem der Ansprüche 1-3, wobei die Wärmerückgewinnungsvorrichtung (4) über Ventile (28, 29) von der ersten Mediumzirkulation (5'), die die Wärmepumpe (1) verlässt, abgeschaltet werden kann, wobei die Ventile vorteilhafterweise 3-Wege-Ventile sind.

5. System (20) nach den Ansprüchen 2 und 4, wobei die Wärmeenergie über die erste Mediumzirkulation (5) direkt vom zweiten Wärmetauscher (25) an die Wärmerückgewinnungsvorrichtung (4) übertragen wird.

6. System (20) nach irgendeinem der Ansprüche 1-5, wobei das System zusätzlich ein Steuerungssystem (8) zur Steuerung des Abluftwärmepumpensystems (20) umfasst.

7. Verfahren zur Steuerung eines Abluftwärmepumpensystems (20) nach irgendeinem der vorhergehenden Ansprüche, wobei
zumindest ein Teil des aus der Wärmepumpe (1) der ersten Mediumzirkulation (5) austretenden gekühlten Mediums direkt zum ersten Wärmetauscher (22) gelenkt wird, um das Medium der Kühlmediumzirkulation (21) abzukühlen.

8. Verfahren nach Anspruch 7, bei dem ein Teil des aus der Wärmepumpe (1) der ersten Mediumzirkulation (5) austretenden gekühlten Mediums gelenkt wird, um den ersten Wärmetauscher (22) zu umgehen, woraufhin das Medium der ersten Mediumzirkulation zur Wärmerückgewinnungsvorrichtung (4) gelenkt wird, von der das erwärmte Medium zurück zur Wärmepumpe gelenkt wird.

9. Verfahren nach Anspruch 8, wobei der zweite Wärmetauscher (25) vom Wärmepumpensystem (20) abgesperrt ist.

10. Verfahren nach irgendeinem der Ansprüche 7-9, wobei das Medium der Kühlmediumzirkulation (21) zum Kühlen eines Gebäudes verwendet wird.

11. Verfahren nach Anspruch 7, wobei das aus der Wärmepumpe (1) der ersten Mediumzirkulation (5') austretende gekühlte Medium in seiner Gesamtheit zum ersten Wärmetauscher (22) und vom ersten Wärmetauscher zurück zur Wärmepumpe gelenkt wird.

12. Verfahren nach Anspruch 11, wobei ein Teil des aus der Wärmepumpe (1) der zweiten Mediumzirkulation (7) austretenden erwärmten Mediums zum zweiten Wärmetauscher (25) gelenkt wird, um das Medium abzukühlen.

## Revendications

1. Système de pompe à chaleur à air d'échappement (20) pour un bâtiment et système de refroidissement pour ledit bâtiment, le système de pompe à chaleur à air d'échappement (20) comprenant :
- une pompe à chaleur (1),
- un dispositif de récupération de chaleur (4) agencé en liaison avec un canal d'air d'échappement (3),
- une première circulation de fluide (5) entre le dispositif de récupération de chaleur et la pompe à chaleur,
- une chaudière (6),
- une seconde circulation de fluide (7) entre la pompe à chaleur et la chaudière, et
- des pompes (10, 11) pour assurer un écoulement de fluides dans la première et la seconde circulation de fluide,
dans lequel le système (20) comprend en outre une circulation de fluide de refroidissement (21), qui est reliée à ladite première circulation de fluide (5) par l'intermédiaire d'un premier échangeur de chaleur (22), un réservoir d'eau de refroidissement (23), à partir duquel la circulation de fluide de refroidissement transfère de l'énergie thermique au premier échangeur de chaleur, et une pompe (24) pour assurer un écoulement du fluide de refroidissement dans la circulation de fluide de refroidissement, dans lequel les systèmes sont configurés de telle sorte que le fluide de refroidissement soit transmis du réservoir d'eau de refroidissement au système de refroidissement.

2. Système (20) selon la revendication 1, lequel système comprend en outre un second échangeur de chaleur (25), lequel échangeur de chaleur transfère l'énergie thermique de la seconde circulation de fluide (7) à la première circulation de fluide (5).

3. Système (20) selon la revendication 2, où ledit second échangeur de chaleur (25) peut être coupé du fonctionnement du système par l'intermédiaire de vannes (28, 29, 31), lesquelles vannes sont avantageusement des vannes à 3 voies.

4. Système (20) selon l'une quelconque des revendications 1 à 3, où ledit dispositif de récupération de chaleur (4) peut être coupé de la première circulation de fluide (5') sortant de la pompe à chaleur (1) par l'intermédiaire de vannes (28, 29), lesquelles vannes sont avantageusement des vannes à 3 voies.

5. Système (20) selon les revendications 2 et 4, où l'énergie thermique est transférée par l'intermédiaire de ladite première circulation de fluide (5) directement du second échangeur de chaleur (25) au dispositif de récupération de chaleur (4).

6. Système (20) selon l'une quelconque des revendications 1 à 5, lequel système comprend en outre un système de commande (8) pour commander le système de pompe à chaleur à air d'échappement (20).

7. Procédé de commande d'un système de pompe à chaleur à air d'échappement (20) selon l'une quelconque des revendications précédentes, dans lequel
au moins une partie du fluide refroidi sortant de la pompe à chaleur (1) de ladite première circulation de fluide (5) est dirigée directement vers le premier échangeur de chaleur (22) pour refroidir le fluide de la circulation de fluide de refroidissement (21).

8. Procédé selon la revendication 7, où une partie du fluide refroidi de la première circulation de fluide (5) sortant de la pompe à chaleur (1) est dirigée pour contourner le premier échangeur de chaleur (22), après quoi le fluide de la première circulation de fluide est dirigé vers le dispositif de récupération de chaleur (4), à partir duquel le fluide chauffé est renvoyé vers la pompe à chaleur.

9. Procédé selon la revendication 8, où le second échangeur de chaleur (25) est isolé du système de pompe à chaleur (20).

10. Procédé selon l'une quelconque des revendications 7 à 9, où le fluide de la circulation de fluide de refroidissement (21) est utilisé pour refroidir un bâtiment.

11. Procédé selon la revendication 7, où le fluide refroidi sortant de la pompe à chaleur (1) de la première circulation de fluide (5') est dirigé dans sa totalité vers le premier échangeur de chaleur (22) et du premier échangeur de chaleur vers la pompe à chaleur.

12. Procédé selon la revendication 11, où une partie du fluide chauffé sortant de la pompe à chaleur (1) de la seconde circulation de fluide (7) est dirigée vers le second échangeur de chaleur (25) pour refroidir le fluide.
